# FASCICULE DE BREVET EUROPEEN

(11) **EP 1 483 993 B1**
(45) Date de publication et mention de la délivrance du brevet: **04.07.2007**
(21) Numéro de dépôt: 04356070.5
(22) Date de dépôt: 12.05.2004
(51) Int. Cl.: A47J 31/44

(54) **Cafetière filtre avec dispositif de verrouillage pour porte filtre pivotant.**
Kaffeemaschine mit Verriegelungsvorrichtung für einen verschwenkbaren Filterträger
Coffee machine with locking device for pivotable filter holder

(30) Priorité: 06.06.2003 FR 0306863
(43) Date de publication de la demande: 08.12.2004
(73) Titulaire: SEB S.A., 69130 Ecully (FR)
(72) Inventeur: Dominguez, Augustin, 65000 Tarbes (FR)
(74) Mandataire: Kiehl, Hubert

(56) Documents cités:
- EP-A- 0 655 213
- DE-A- 1 802 598
- DE-A- 19 620 381
- US-A- 5 113 752

## Description

La présente invention se rapporte au domaine technique général des machines à boissons chaudes telles que les cafetières filtre. La présente invention concerne plus particulièrement les appareils comportant un porte filtre équipé d'un clapet anti-gouttes susceptible d'être soulevé par une verseuse.

Dans les appareils du type précité, lorsque le porte filtre est amovible par rapport au boîtier, il est nécessaire de prévoir des moyens de blocage du porte filtre pour éviter que l'engagement de la verseuse sous le porte filtre ne soulève ledit porte filtre.

Il est connu dans un appareil du type précité un porte filtre comportant une patte élastique susceptible de venir en prise avec un ergot du boîtier. L'ergot est ménagé dans la partie inférieure d'un support de porte filtre monté pivotant par rapport au boîtier. Le support de porte filtre est monté amovible par rapport au corps du boîtier, pour le nettoyage. Le boîtier présente une partie supérieure recouvrant le porte filtre. Ces dispositions permettent d'envisager un boîtier comportant un couvercle pivotant agencé au dessus du porte filtre. Toutefois, le retrait du porte filtre est malaisé si le support de porte filtre n'a pas été retiré du boîtier.

Une cafetière filtre selon le préambule de la revendication 1 est connue du document EP 0 655 213.

L'objet de la présente invention est de proposer une cafetière filtre comportant un porte filtre équipé d'un clapet anti-gouttes susceptible d'être soulevé par une verseuse, qui présente une construction ergonomique.

Cet objet est atteint avec une cafetière filtre comportant un boîtier présentant un logement de porte filtre recevant un porte filtre, et un socle prévu pour recevoir une verseuse, du fait que le logement de porte filtre comporte au moins une conformation concave présentant une entrée supérieure, une paroi latérale prolongée à son extrémité inférieure par une zone d'appui supérieure, un seuil de retenue étant ménagé entre la zone d'appui supérieure et la paroi latérale, le porte filtre comportant au moins un moyen de retenue supérieur prévu pour coopérer avec la zone d'appui supérieure. Cette disposition permet de bloquer en translation verticale le porte filtre placé dans le logement de porte filtre. Ainsi, la mise en place de la verseuse sous le porte filtre n'entraîne pas de remontée excessive du porte filtre. Les échappements de vapeur hors de l'appareil entre la sortie d'une douchette agencée dans le couvercle et le porte filtre peuvent ainsi être fortement réduits, voire évités. De ce fait il n'est pas nécessaire de prévoir de bloquer le couvercle par rapport au boîtier. Le couvercle peut notamment être simplement monté articulé sur le boîtier.

Avantageusement alors, la conformation concave présente une zone d'appui inférieure comportant une partie inclinée reliée à une partie inférieure, la zone d'appui supérieure étant ménagée au dessus de la partie inférieure, et le porte filtre comporte au moins un moyen de guidage prévu pour coopérer avec la zone d'appui inférieure. Cette disposition permet de guider le porte filtre vers sa position de verrouillage. L'utilisateur doit seulement placer le porte filtre dans le logement de porte filtre.

Avantageusement alors la zone d'appui inférieure comporte une partie supérieure reliée à la partie inclinée. Cette disposition permet d'offrir une position surélevée facilitant le retrait du porte filtre.

Avantageusement encore le porte filtre comporte des moyens d'appui latéraux. Cette disposition permet de guider et de stabiliser le porte filtre.

Avantageusement alors, au moins un des moyens d'appui latéraux est associé à un moyen de rappel. Cette disposition permet une meilleure stabilisation du porte filtre.

Selon une forme de réalisation avantageuse, les moyens d'appui latéraux sont formés par des ergots ménagés sur des languettes élastiques issues d'une couronne appartenant au porte filtre. Les ergots peuvent également former les moyens de guidage.

Avantageusement alors, pour un bon guidage et un bon maintien, la couronne comporte au moins trois ergots.

Avantageusement encore, pour un meilleur maintien, une cavité est ménagée dans la conformation concave sous la zone d'appui supérieure. La cavité peut recevoir le ou l'un des moyens d'appui latéraux.

Avantageusement alors, la cavité est ménagée dans une zone de retenue inférieure de la conformation concave, la zone de retenue inférieure étant prolongée par une zone inclinée vers l'entrée supérieure de la conformation concave. Cette disposition permet d'améliorer le maintien du porte filtre dans le logement de porte filtre.

Avantageusement encore, le porte filtre comporte un moyen d'appui supérieur en contact avec le boîtier lorsque le moyen de retenue supérieur est en contact avec la zone d'appui supérieure. Cette disposition permet de bloquer verticalement le porte filtre dans le logement de porte filtre.

Selon une disposition avantageuse, la verseuse comporte une pièce d'obturation supérieure munie d'un clapet de remplissage associé à un moyen de rappel. Le contact du clapet de remplissage avec le porte filtre permet de recueillir la boisson, les arômes étant préservés lorsque la verseuse est retirée du socle.

Selon une autre disposition avantageuse, le porte filtre comporte un clapet d'obturation inférieur associé à un moyen de rappel, permettant de retenir la boisson dans le porte filtre lorsque la verseuse n'est pas en place sur le socle, la verseuse en place sur le socle étant susceptible d'actionner le clapet d'obturation pour libérer et recueillir la boisson.

L'invention sera mieux comprise à l'étude d'un exemple de réalisation, pris à titre nullement limitatif, illustré dans les figures annexées dans lesquelles :
- la figure 1 est une section verticale longitudinale d'une cafetière filtre selon l'invention, le couvercle étant rabattu sur le boîtier,
- la figure 2 est une vue en perspective couvercle relevé de la partie supérieure de la cafetière filtre illustrée à la figure 1,
- la figure 3 est une vue en perspective du porte filtre de la cafetière filtre illustrée aux figures 1 et 2,
- la figure 4 est une vue partielle en coupe de la partie inférieure du logement de porte filtre et du porte filtre illustré à la figure 3,
- la figure 5 est une vue de la partie inférieure du logement de porte filtre illustré à la figure 4,
- la figure 6 est une vue sous un autre angle d'un détail de la partie inférieure du logement de porte filtre illustré à la figure 5.

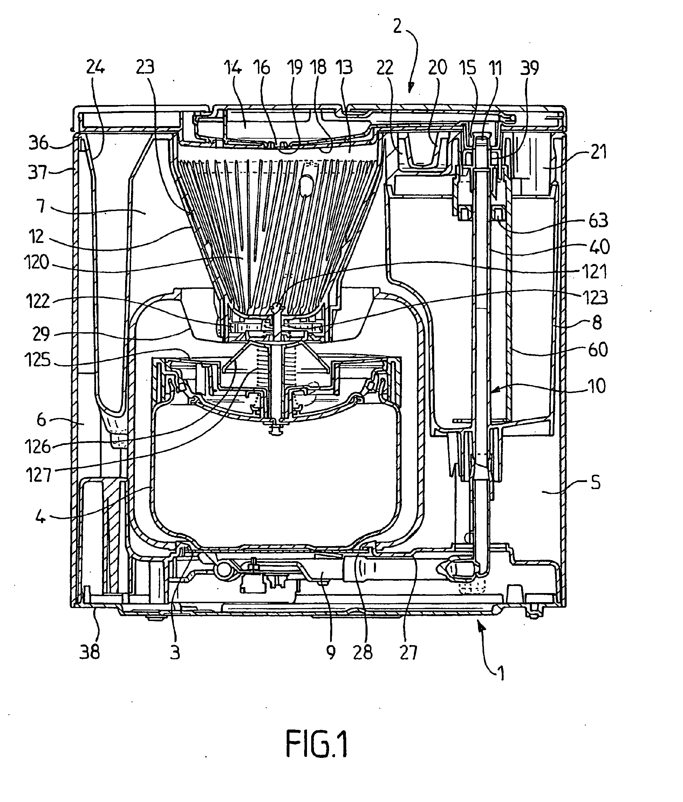

La cafetière filtre illustrée à la figure 1 comporte un boîtier 1 fermé par un couvercle 2. Le boîtier 1 présente un socle 3 prévu pour recevoir une verseuse 4. Le boîtier 1 forme un premier montant 5 et un deuxième montant 6 de part et d'autre du socle 3. Le premier montant 5 et le deuxième montant 6 sont réunis par une arche 7 au dessus du socle 3. Un réservoir d'eau 8 est agencé dans le boîtier 1. Le réservoir d'eau 8 est relié à une chaudière 9 agencée dans le boîtier 1. Le réservoir d'eau 8 est agencé partiellement dans le premier montant 5. La chaudière 9 est disposée dans le socle 3. La chaudière 9 est reliée à un conduit ascendant 10 de montée d'eau chaude.

Le conduit ascendant 10 est muni dans sa partie supérieure d'un orifice de sortie d'eau chaude 11. Le conduit ascendant 10 est disposé partiellement dans le réservoir d'eau 8. Le boîtier 1 comprend un logement de porte filtre 12 et un porte filtre 13. Le logement de porte filtre 12 est agencé dans l'arche 7. Le porte filtre 13 est disposé dans le logement de porte filtre 12. Une douchette 14 est agencée dans le couvercle 2. La douchette 14 comporte une ouverture d'entrée 15 communiquant avec une ouverture de sortie 16. Le conduit ascendant 10 est relié à l'ouverture d'entrée 15 lorsque le couvercle 2 ferme le boîtier 1. L'ouverture de sortie 16 est alors disposée au dessus du porte filtre 13.

Le porte filtre 13 comprend un cône filtre 120 muni de rainures internes, un clapet d'obturation inférieur 121 et des moyens de retenue supérieurs 122. Le clapet d'obturation inférieur 121 est associé à un moyen de rappel 123. La verseuse 4 comporte une pièce d'obturation supérieure 125 munie d'un clapet de remplissage 126 coopérant avec le clapet d'obturation inférieur 121 lorsque la verseuse 4 est en place sur le socle 3. Le clapet de remplissage 126 est associé à un autre moyen de rappel 127.

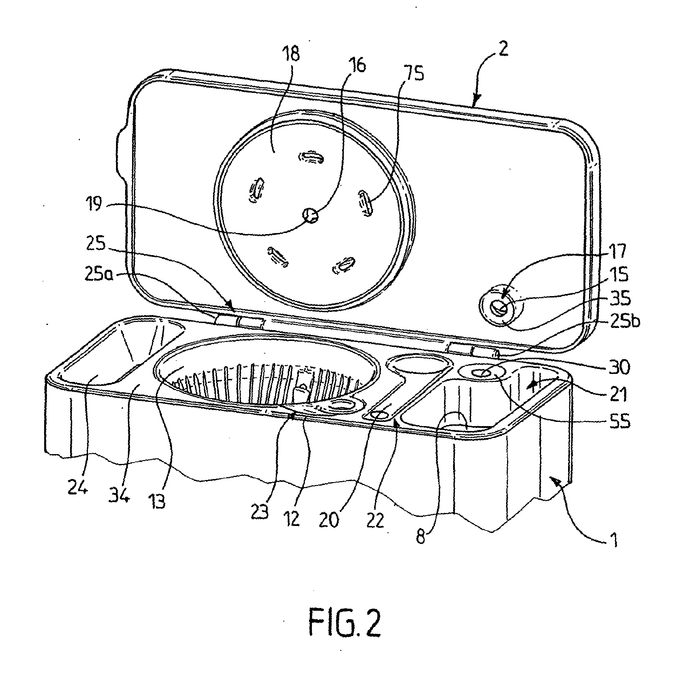

Tel que mieux visible à la figure 2, le couvercle 2 est articulé sur le boîtier 1. Le réservoir d'eau 8 présente une ouverture dans la face supérieure du boîtier 1. La face inférieure du couvercle 2 présente une protubérance inférieure 17, dans laquelle est ménagée l'ouverture d'entrée 15 de la douchette 14, et un bossage inférieur 18, comportant une ouverture 19 pour l'écoulement de l'eau chaude agencée en regard de l'ouverture de sortie 16 de la douchette 14.

Une embouchure de remplissage 21 est ménagée dans la face supérieure du boîtier 1 au dessus du réservoir d'eau 8. L'embouchure de remplissage 21 est agencée dans le premier montant 5. Un logement d'accessoire 22 est ménagé dans la face supérieure du boîtier 1 à coté de l'ouverture de remplissage 21. Le logement d'accessoire 22 est prévu pour recevoir une dosette 20. Le logement d'accessoire 22 est agencé dans l'arche 7 au dessus du réservoir d'eau 8. Un compartiment 23 pour la préparation de la boisson est ménagé dans la face supérieure du boîtier 1 à côté du logement d'accessoire 22. Le compartiment 23 forme le logement de porte filtre 12. Le compartiment 23 est agencé dans l'arche 7 au dessus de la verseuse 4. Un logement de filtres 24 est ménagé dans la face supérieure du boîtier 1 à côté du compartiment 23. Le logement de filtres 24 est agencé dans le deuxième montant 6.

Le boîtier 1 présente une face supérieure formée par un support 36. L'embouchure 21, le logement d'accessoire 22, le compartiment 23 et le logement de filtres 24 sont ménagés dans le support 36. Le réservoir d'eau 8 est maintenu entre le support 36 et une pièce 27. La pièce 27 est assemblée avec le support 36 au moyen de vis, non montrées au figures. La pièce 27 sert également à maintenir un plateau chauffant 28 en contact avec la chaudière 9. Le support 36 est monté sur une jupe 37. La partie inférieure de la jupe 37 est fermée par une base 38, visible à la figure 1. La base 38 est assemblée avec la pièce 27 au moyen de vis, non montrées au figures. Une coupelle 29 est suspendue dans la paroi inférieure du support 36 au dessus du plateau chauffant 28. La coupelle 29 permet de loger la partie inférieure du logement de porte filtre 12.

Le conduit ascendant 10 comporte un tube de montée d'eau chaude 40 avantageusement issu du fond du réservoir d'eau 8. Un capuchon 39 comportant une paroi 60 plongeant dans le réservoir d'eau 8 est monté sur le tube de montée d'eau chaude 40. Un flotteur 63 est monté autour du tube de montée d'eau chaude 40. La protubérance inférieure 17 comporte un joint à lèvres 35. Des ouvertures d'entrée de vapeur 75 sont agencées dans le bossage inférieur 18. Le boîtier 1 présente une paroi supérieure 34, de préférence plane. Le conduit ascendant 10 comporte une extrémité supérieure 30 fermée en sa partie supérieure, avec un orifice débouchant en regard d'une paroi latérale du boîtier 1.

Le couvercle 2 présente une articulation 25 avec le boîtier 1. Tel que mieux visible à la figure 2, l'articulation 25 comporte deux charnières 25a, 25b. L'articulation 25 est adjacente à l'embouchure de remplissage 21 et au logement de filtres 24.

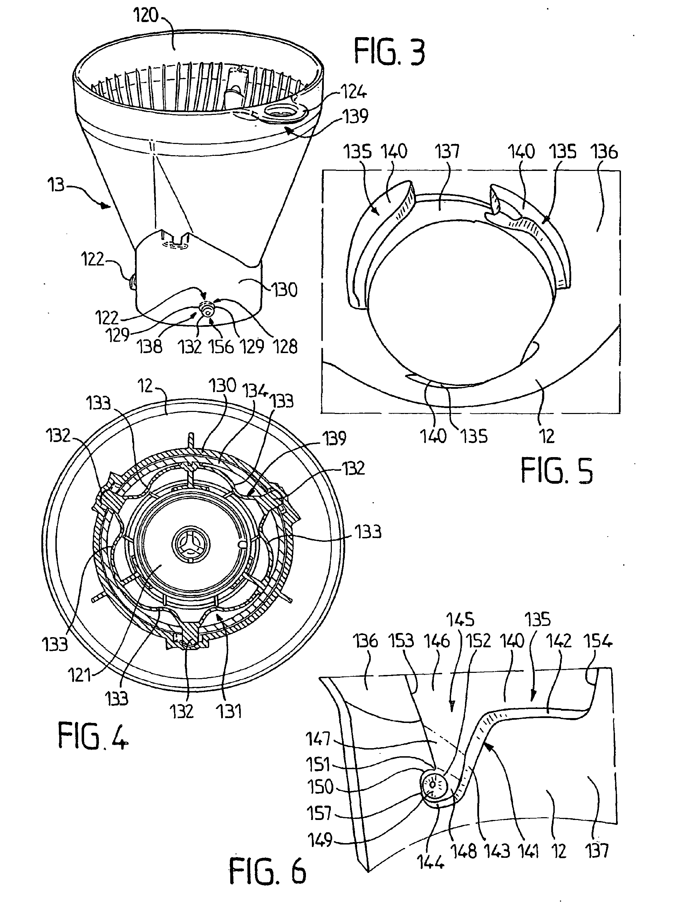

La figure 3 montre le porte filtre 13. Une poignée 124 est agencée au niveau du bord supérieur du cône filtre 120. Le cône filtre 120 est prolongé en son extrémité inférieure par une paroi cylindrique 130 sur laquelle sont ménagées des nervures 128 formant les moyens de retenue supérieurs 122. Le cône filtre 120 comporte trois nervures 128 réparties sur la périphérie de la paroi cylindrique 130. Chaque nervure 128 présente des bords latéraux 129 inclinés. Sous chaque nervure 128 est monté un ergot 132.

Tel que mieux visible à la figure 4, les ergots 132 sont issus d'une pièce de verrouillage 131. Les ergots 132 sont ménagés sur des languettes élastiques 133 reliées à une couronne 134 de la pièce de verrouillage 131. Les deux extrémités des languettes élastiques 133 sont reliées à la couronne 134. La couronne 134 est montée à l'intérieur de la paroi cylindrique 130 du cône filtre 120. Les ergots 132 sortent à l'extérieur de la couronne 134 grâce à des passages ménagés dans la paroi latérale externe de la couronne 134. Le clapet d'obturation inférieur 121 est monté à l'intérieur de la couronne 134.

Tel que montré à la figure 5, le logement de porte filtre 12 présente une partie supérieure tronconique 136 prolongée par une partie inférieure cylindrique 137.

Trois conformations concaves 135 prévues pour recevoir les moyens de retenue 122 sont agencées à la jonction de la partie supérieure tronconique 136 et de la partie inférieure cylindrique 137.

Tel que montré à la figure 6, chaque conformation concave 135 présente une entrée supérieure 140, une zone d'appui inférieure 141 comprenant une partie supérieure 142, une partie inclinée 143 et une partie inférieure 144, la partie inclinée 143 étant reliée d'une part à la partie supérieure 142 et d'autre part à la partie inférieure 144. Les entrées supérieures 140 débouchent dans la partie supérieure tronconique 136. Les ergots 132 forment des moyens de guidage 156 prévus pour coopérer avec la zone d'appui inférieure 141.

Chaque conformation concave 135 présente un renfoncement 145 présentant une zone d'accueil supérieure 146, une zone inclinée 147 et une zone de retenue inférieure 148. Les ergots 132 forment des moyens d'appui latéraux 138. Les languettes élastiques 133 forment des moyens de rappel 139 pour les moyens d'appui latéraux 138. Dans les zones d'accueil supérieures 146, les moyens d'appui latéraux 138 ne sont pas en contact avec les parois latérales du logement de porte filtre 12. Les moyens d'appui latéraux 138 viennent en contact avec les parois latérales du logement de porte filtre 12 dans les zones de transition intermédiaires 147 et restent en contact avec les parois latérales du logement de porte filtre 12 dans les zones de retenue inférieures 148, pour assurer un bon maintien du porte filtre 13.

Une cavité 149 à parois chanfreinées est ménagée dans chaque zone de retenue inférieure 148. Une zone d'appui supérieure 150 est ménagée au dessus de chaque partie inférieure 144. Un seuil de blocage 152 est ménagé entre chaque cavité 149 et chaque zone inclinée 147. Chaque renfoncement 145 comporte deux parois latérales 153, 154. Chaque paroi latérale 153 rejoint l'un des seuils de retenue 151. Chaque autre paroi latérale 154 rejoint la partie supérieure 142. Les parois latérales 153, 154 sont avantageusement inclinées vers les entrées supérieures 140. Chaque paroi latérale 154 est prolongée à son extrémité inférieure par l'une des zones d'appui supérieures 150. Un seuil de retenue 151 est ménagé entre chaque zone d'appui supérieure 150 et chaque paroi latérale 153. Une butée latérale 157 relie la partie inférieure 144 de la zone d'appui inférieure 141 à la zone d'appui supérieure 150.

La poignée 124 forme un moyen d'appui supérieur 155 sur le boîtier 1 et permet de bloquer en translation verticale le porte filtre 13 dans le logement de porte filtre 12.

La cafetière selon l'invention s'utilise de la manière suivante.

Lorsque l'utilisateur met en place le porte filtre 13 dans le logement de porte filtre 12, les formes conjuguées du logement de porte filtre 12 et du porte filtre 13 amènent les moyens de guidage 156 formés par les ergots 132 en contact avec les parties inclinées 143 des zones d'appui inférieures 141, et/ou les moyens d'appuis latéraux 138 formés par les ergots 132 en contact avec les zones inclinées 147 des conformations concaves 135. La paroi cylindrique 130 du porte filtre 13 est guidée en rotation par la partie inférieure cylindrique 137 du logement de porte filtre 12. Le poids du porte filtre 13 suffit pour que les zones inclinées 147 repoussent les moyens d'appuis latéraux 138 contre les moyens de rappel 139. Les seuils de blocage 152 sont alors franchis. Lorsque la verseuse 4 munie de la pièce d'obturation supérieure 125 est en place sur le socle 3, le clapet de remplissage 126 repousse le clapet d'obturation inférieur 121 du porte filtre 13, et les bords latéraux 129 des nervures 128 formant les moyens de retenue supérieurs 122 sont amenés en contact avec les zones d'appui supérieures 150. Les seuils de retenue 151 permettent d'éviter la remontée du porte filtre 13 sous l'action de la verseuse 4. La poignée 124 forme un moyen d'appui supérieur 155 sur le boîtier 1 et permet de bloquer en translation verticale le porte filtre 13 dans le logement de porte filtre 12.

Pour retirer le porte filtre 13 du logement de porte filtre 12, l'utilisateur peut faire pivoter la poignée 124. Les moyens d'appui latéraux 138 sont alors guidés par les parois chanfreinées des cavités 149 et dépassent les seuils de blocage 152. Les moyens de retenue supérieurs 122 franchissent les seuils de retenue 151. Les moyens de guidage 156 prennent appui sur les parties inclinées 143 puis sur les parties supérieures 142. Le porte filtre 13 repose alors en position surélevée dans le logement de porte filtre 12 et peut être aisément retiré de la cafetière.

La cafetière selon l'invention présente ainsi une utilisation particulièrement pratique. De plus, la réalisation d'une étanchéité entre le couvercle 2 et la partie supérieure du boîtier 1 autour du compartiment 23 pour la préparation de la boisson est facilitée. La cafetière selon l'invention permet notamment de limiter notoirement les déperditions d'arôme.

A titre de variante le porte filtre 13 ne comporte pas nécessairement trois moyens de retenue supérieurs 122 et le logement de porte filtre 12 ne comporte pas nécessairement trois conformations concaves 135. Notamment, un moyen de retenue supérieur 122 peut coopérer avec une conformation concave 135.

A titre de variante les moyens de retenue supérieurs 122 pourraient être formés par les ergots 132.

A titre de variante, la pièce d'obturation supérieure 125 de la verseuse 4 ne comporte pas nécessairement un clapet de remplissage 126. La pièce d'obturation supérieure 125 peut coopérer directement avec le clapet d'obturation inférieur 126.

A titre de variante, le porte filtre 13 ne comporte pas nécessairement un clapet d'obturation inférieur 126.

A titre de variante, le couvercle 2 n'est pas nécessairement articulé sur le boîtier 1. Le couvercle 2 est prévu pour fermer le boîtier 1. Le couvercle 2 peut par exemple être posé sur le boîtier 1.

A titre de variante, tous les moyens d'appui latéraux 138 ne sont pas nécessairement associés à des moyens de rappel 139.

A titre de variante, les moyens d'appui latéraux 138 ne sont pas nécessairement au nombre de trois.

A titre de variante, les moyens de rappel 139 peuvent notamment être formés par une ou plusieurs languettes élastiques 133, ou par des pièces ressort indépendantes des ergots 132.

A titre de variante, le moyen d'appui supérieur 155 n'est pas nécessairement formé par la poignée 124 du porte filtre 13.

A titre de variante, les moyens de guidage 156 ne sont pas nécessairement au nombre de trois.

La présente invention n'est nullement limitée à l'exemple de réalisation décrit et à ses variantes, mais englobe de nombreuses modifications dans le cadre des revendications.

## Revendications

1. Cafetière filtre comportant un boîtier (1) présentant un logement de porte filtre (12) recevant un porte filtre (13), et un socle (3) prévu pour recevoir une verseuse (4), **caractérisé en ce que** le logement de porte filtre (12) comporte au moins une conformation concave (135) présentant une entrée supérieure (140), une paroi latérale (153) prolongée à son extrémité inférieure par une zone d'appui supérieure (150), un seuil de retenue (151) étant ménagé entre la zone d'appui supérieure (150) et la paroi latérale (153), le porte filtre (13) comportant au moins un moyen de retenue supérieur (122) prévu pour coopérer avec la zone d'appui supérieure (150).

2. Cafetière filtre selon la revendication 1, **caractérisé en ce que** la conformation concave (135) présente une zone d'appui inférieure (141) comportant une partie inclinée (143) reliée à une partie inférieure (144), la zone d'appui supérieure (150) étant ménagée au dessus de la partie inférieure (144), le porte filtre (13) comportant au moins un moyen de guidage (156) prévu pour coopérer avec la zone d'appui inférieure (141).

3. Cafetière filtre selon la revendication 2, **caractérisée en ce que** la zone d'appui inférieure (141) comporte une partie supérieure (142) reliée à la partie inclinée (143).

4. Cafetière filtre selon l'une des revendications 1 à 3, **caractérisée en ce que** le porte filtre (13) comporte des moyens d'appui latéraux (138).

5. Cafetière filtre selon la revendication 4, **caractérisée en ce qu'**au moins un des moyens d'appui latéraux (138) est associé à un moyen de rappel (139).

6. Cafetière filtre selon la revendication 5, **caractérisé en ce que** les moyens d'appui latéraux (138) sont formés par des ergots (132) ménagés sur des languettes élastiques (133) issues d'une couronne (134) appartenant au porte filtre (13).

7. Cafetière filtre selon la revendication 6, **caractérisé en ce que** la couronne (134) comporte au moins trois ergots (132).

8. Cafetière filtre selon l'une des revendications 1 à 7, **caractérisée en ce qu'**une cavité (149) est ménagée dans la conformation concave (135) sous la zone d'appui supérieure (150).

9. Cafetière filtre selon la revendication 8, **caractérisée en ce que** la cavité (149) est ménagée dans une zone de retenue inférieure (148) de la conformation concave (135), la zone de retenue inférieure (148) étant prolongée par une zone inclinée (147) vers l'entrée supérieure (140) de la conformation concave (135).

10. Cafetière filtre selon l'une des revendications 1 à 9, **caractérisé en ce que** le porte filtre (13) comporte un moyen d'appui supérieur (155) en contact avec le boîtier (1) lorsque le moyen de retenue supérieur (122) est en contact avec la zone d'appui supérieure (150).

11. Cafetière filtre selon l'une des revendications 1 à 10, **caractérisé en ce que** la verseuse (4) comporte une pièce d'obturation supérieure (125) munie d'un clapet de remplissage (126) associé à un moyen de rappel (127).

12. Cafetière filtre selon l'une des revendications 1 à 11, **caractérisé en ce que** le porte filtre (13) comporte un clapet d'obturation inférieur (121) associé à un moyen de rappel (123).

## Claims

1. A filter coffee machine comprising a housing (1) provided with a filter holder recess (12) receiving a filter holder (13), and a stand (3) designed to receive a jug (4), said filter coffee machine being **characterized in that** the filter holder recess (12) is provided with at least one concave shaped piece in relief (135) having a top inlet (140), a side wall (153) extended at its bottom end by a top abutment zone (150), a retaining threshold (151) being provided between the top abutment zone (150) and the side wall (153), the filter holder (13) having at least one top retaining means (122) designed to co-operate with the top abutment zone (150).

2. A filter coffee machine according to claim 1, **characterized in that** the concave shaped piece in relief (135) has a bottom abutment zone (141) having a sloping portion (143) connected to a bottom portion (144), the top abutment zone (150) being provided above the bottom portion (144), the filter holder (13) having at least one guide means (156) designed to co-operate with the bottom abutment zone (141).

3. A filter coffee machine according to claim 2, **characterized in that** the bottom abutment zone (141) has a top portion (142) connected to the sloping portion (143).

4. A filter coffee machine according to any one of claims 1 to 3, **characterized in that** the filter holder (13) has side abutment means (138).

5. A filter coffee machine according to claim 4, **characterized in that** at least one of the side abutment means (138) is associated with return means (139).

6. A filter coffee machine according to claim 5, **characterized in that** the side abutment means (138) are formed by lugs (132) provided on resilient tongues (133) integral with a ring (134) belonging to the filter holder (13).

7. A filter coffee machine according to claim 6, **characterized in that** the ring (134) is provided with at least three lugs (132).

8. A filter coffee machine according to any one of claims of 1 to 7, **characterized in that** a cavity (149) is provided in the concave shaped piece in relief (135) under the top abutment zone (150).

9. A filter coffee machine according to claim 8, **characterized in that** the cavity (149) is provided in a bottom retaining zone (148) of the concave shaped piece in relief (135), the bottom retaining zone (148) being extended by a sloping zone (147) that slopes towards the top inlet (140) of the concave shaped piece in relief (135).

10. A filter coffee machine according to any one of claims 1 to 9, **characterized in that** the filter holder (13) has top abutment means (155) in contact with the housing (1) when the top retaining means (122) are in contact with the top abutment zone (150).

11. A filter coffee machine according to any one of claims 1 to 10, **characterized in that** the jug (4) has a top closure piece (125) provided with a filler valve member (126) associated with return means (127).

12. A filter coffee machine according to any one of claims 1 to 11, **characterized in that** the filter holder (13) has a bottom closure valve member (121) associated with return means (123).

## Patentansprüche

1. Filterkaffeemaschine mit einem Gehäuse (1), das eine Filterträgeraufnahme (12), die einen Filterträger (13) aufnimmt, und einen Sockel (3) aufweist, der zum Aufnehmen einer Kanne (4) vorgesehen ist, **dadurch gekennzeichnet, dass** die Filterträgeraufnahme (12) mindestens eine konkave Ausformung (135) umfasst, die einen oberen Eingang (140) und eine an ihrem unteren Ende durch einen oberen Stützbereich (150) verlängerte Seitenwand (153) aufweist, wobei eine Haltekante (151) zwischen dem oberen Stützbereich (150) und der Seitenwand (153) eingebracht ist, wobei der Filterträger (13) mindestens ein oberes Haltemittel (122) aufweist, der zum Zusammenwirken mit dem oberen Stützbereich (150) vorgesehen ist.

2. Filterkaffeemaschine nach Anspruch 1, **dadurch gekennzeichnet, dass** die konkave Ausformung (135) einen unteren Stützbereich (141) aufweist, der einen geneigten Teil (143) umfasst, der mit einem unteren Teil (144) verbunden ist, wobei der obere Stützbereich (150) oberhalb des unteren Teils (144) eingebracht ist, wobei der Filterträger (13) mindestens ein Führungsmittel (156) aufweist, das zum Zusammenwirken mit dem unteren Stützbereich (141) vorgesehen ist.

3. Filterkaffeemaschine nach Anspruch 2, **dadurch gekennzeichnet, dass** der untere Stützbereich (141) einen oberen Teil (142) aufweist, der mit dem geneigten Teil (143) verbunden ist.

4. Filterkaffeemaschine nach einem der Ansprüche 1 bis 3, **dadurch gekennzeichnet, dass** der Filterträger (13) seitliche Stützmittel (138) aufweist.

5. Filterkaffeemaschine nach Anspruch 4, **dadurch gekennzeichnet, dass** ein Rückstellmittel (139) einem der seitlichen Stützmittel (138) zugeordnet ist.

6. Filterkaffeemaschine nach Anspruch 5, **dadurch gekennzeichnet, dass** die seitlichen Stützmittel (138) durch Nasen (132) gebildet sind, die an elastischen Zungen (133) angebracht sind, die aus einem Kranz (134) hervorgehen, der zum Filterträger (13) gehört.

7. Filterkaffeemaschine nach Anspruch 6, **dadurch gekennzeichnet, dass** der Kranz (134) mindestens drei Nasen (132) aufweist.

8. Filterkaffeemaschine nach einem der Ansprüche 1 bis 7, **dadurch gekennzeichnet, dass** ein Hohlraum (149) in der konkaven Ausformung (135) unterhalb des oberen Stützbereichs (150) eingebracht ist.

9. Filterkaffeemaschine nach Anspruch 8, **dadurch gekennzeichnet, dass** der Hohlraum (149) in einem unteren Haltebereich (148) der konkaven Ausformung (135) eingebracht ist, wobei der untere Haltebereich (149) durch einen geneigten Bereich (147) zum oberen Eingang (140) der konkaven Ausformung (135) verlängert ist.

10. Filterkaffeemaschine nach einem der Ansprüche 1 bis 9, **dadurch gekennzeichnet, dass** der Filterträger (13) ein oberes Stützmittel (155) aufweist, das mit dem Gehäuse (1) in Kontakt steht, wenn das obere Haltemittel (122) mit dem oberen Stützbereich (150) in Kontakt steht.

11. Filterkaffeemaschine nach einem der Ansprüche 1 bis 10, **dadurch gekennzeichnet, dass** die Kanne (4) einen oberen Verschlussteil (125) aufweist, der mit einem Befüllungsventil (126) versehen ist, dem ein Rückstellmittel (127) zugeordnet ist.

12. Filterkaffeemaschine nach einem der Ansprüche 1 bis 11, **dadurch gekennzeichnet, dass** der Filterträger (13) ein unteres Verschlussventil (121) aufweist, dem ein Rückstellmittel (123) zugeordnet ist.
